# EUROPEAN PATENT APPLICATION

(11) **EP 4 372 877 A1**
(43) Date of publication of application: **22.05.2024**
(21) Application number: 23169469.6
(22) Date of filing: 24.04.2023
(51) Int. Cl.: H01M 50/204, H01M 50/244, H01M 50/258, H01M 50/264

(54) **BATTERY MODULE AND BATTERY PACK**

(30) Priority: 15.11.2022 CN 202211427182
(71) Applicant: CALB Group Co., Ltd., Changzhou City, Jiangsu Province (CN)
(72) Inventor: SHI, Yanyan, Changzhou City, Jiangsu Province (CN); JIANG, Xinwei, Changzhou City, Jiangsu Province (CN)
(74) Representative: Becker, Eberhard

(57) **Abstract**

The invention discloses a battery module and a battery pack. The battery module includes an end plate (220) and a side plate (100) connected to the end plate (220), forming an accommodation space (240) together with the end plate (220), and including a body (10) and a fixed side lug (20) integrally formed with the body (10). The fixed side lug (20) is formed by bending part of the body (10) towards a side away from a battery, and the fixed side lug (20) is configured to be connected to a battery box. The battery module also includes a plurality of single cells accommodated in the accommodation space (240). In the battery module provided by the invention, part of the body (10) of the side plate (100) is bent and formed to form the fixed side lug (20).

## Description

### BACKGROUND

### Technical Field

The disclosure relates to the technical field of batteries, and in particular, relates to a battery module and a battery pack.

### Description of Related Art

With the development of the economy, the emphasis on environmental issues is increasing, so the use of electric vehicles using battery packs as energy supplies are becoming increasingly popular. The battery module is the core component in a battery pack, so the safety features of the battery module are important.

A battery module includes single cells, an end plate, and a side plate. The end plate and the side plate form an accommodation space for the single cells, and a plurality of battery modules are then installed in the battery box to form the battery pack.

In the related art, when the battery module bracket is placed in the battery box, the connection structure with the battery box is not provided, so that stability of the entire battery pack is insufficient.

### SUMMARY

In order to solve at least one problem in the related art, according to one aspect of the disclosure, the disclosure provides a battery module including an end plate and a side plate connected to the end plate and forming an accommodation space together with the end plate. The side plate includes a body and a fixed side lug integrally formed with the body. The fixed side lug is formed by bending part of the body towards a side away from a battery. The body is formed with a through hole at the bent position. The fixed side lug is configured to be connected to a battery box. The battery module also includes a plurality of single cells accommodated in the accommodation space.

Through the above arrangement, the side plate is arranged to include the body and the fixed side lug integrally formed with the body, that is, part of the side plate is bent and formed to form the fixed side lug. In this way, the fixed side lug and the body are integrally formed, so the forming process is simple, and molding may be conveniently performed. Further, the fixed side lug can increase the strength of the body itself, and the fixed side lug is configured to be connected to a box body of a battery pack. In this way, the stability of the entire battery pack after molding is improved.

According to the second aspect of the disclosure, the disclosure further provides a battery pack including a box body and the abovementioned battery module. The fixed side lug on the side plate is connected to the box body.

Therefore, by allowing the side plate of the battery module and the fixed side lug to be integrally formed and allowing the fixed side lug to overlap with the box body and to be connected to the battery box, the installation stability of the entire battery pack is ensured.

### BRIEF DESCRIPTION OF THE DRAWINGS

FIG. 1 is a schematic structural view of a battery module according to the first embodiment of the disclosure.
FIG. 2 is a schematic structural view of a side plate of FIG. 1.
FIG. 3 is a front view of the side plate of FIG. 2.
FIG. 4 is a right side view of the side plate of FIG. 2.
FIG. 5 is a top view of the side plate of FIG. 2.
FIG. 6 is a schematic enlarged view of the region I of FIG. 1.
FIG. 7 is a schematic structural view of the side plate of FIG. 1 before a fixed side lug is formed.
FIG. 8 is a schematic structural view of the side plate according to another embodiment of the disclosure.
FIG. 9 is a schematic structural view of the side plate according to still another embodiment of the disclosure.
FIG. 10 is a schematic structural view of a battery pack according to the second embodiment of the disclosure.
FIG. 11 is a schematic enlarged view of the region II of FIG. 10.

### DESCRIPTION OF THE EMBODIMENTS

For better understanding and implementation, the accompanying drawings in the embodiments of the disclosure are included to provide a clear and complete description of the technical solutions provided in the embodiments of the disclosure.

In the description of the disclosure, it should be noted that the terms "up", "down", "front", "rear", "left", "right", "vertical", "horizontal", "top", "bottom", "inner", "outer", and other indication orientations or positional relationships are based on the orientations and positional relationships shown in the drawings, are provided to facilitate the description of the disclosure and simplify the description, and are not intended to indicate or imply that the indicated device or element must have a specific orientation or be constructed and operated in a specific orientation, so cannot be understood as limiting the disclosure.

Unless otherwise defined, all technical and scientific terms used herein have the same meaning as commonly understood by a person having ordinary skill in the art to which this disclosure belongs. The terms used herein in the specification of the disclosure are for the purpose of describing specific embodiments only, and are not intended to limit the disclosure.

The disclosure is further described in detail in combination with accompanying drawings.

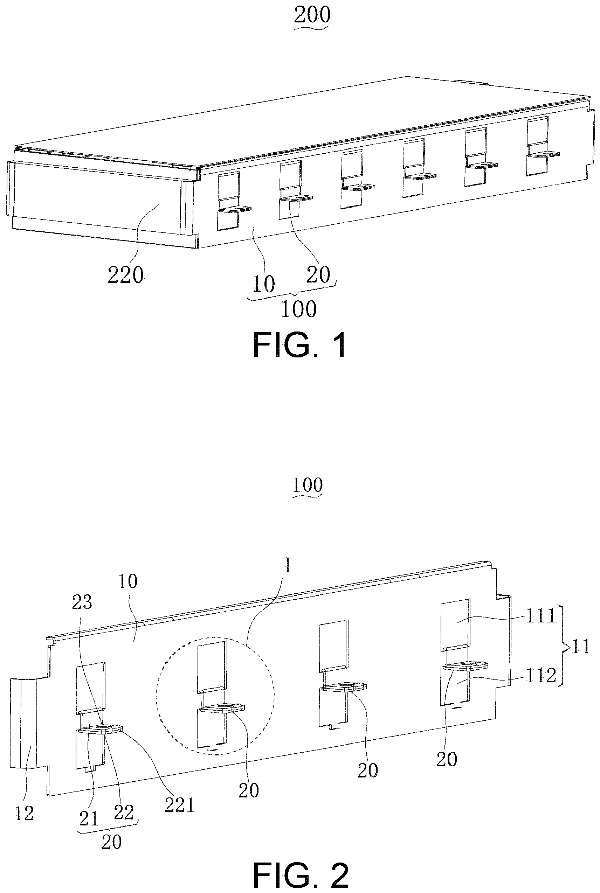

With reference to FIG. 1 to FIG. 9, a battery module 200 provided by an embodiment of the disclosure includes single cells, an end plate 220, and a side plate 100.

Herein, with reference to FIG. 1 and FIG. 2, the side plate 100 is connected to the end plate 220 and forms an accommodation space 240 together with the end plate 220. The side plate 100 includes a body 10 and a fixed side lug 20 integrally formed with the body 10. The fixed side lug 20 is formed by bending part of the body 10 towards a side away from a battery, and the fixed side lug 20 is configured to be connected to a beam 320 in a box body 310 of a battery pack 300. The plurality of single cells are accommodated in the accommodation space 240.

In the battery module 200, the side plate 100 is arranged to include the body 10 and the fixed side lug 20 integrally formed with the body 10, that is, part of the side plate 100 is bent and formed to form the fixed side lug 20. In this way, the fixed side lug 20 and the body 10 are integrally formed, so the forming process is simple, and molding may be conveniently performed. Further, the fixed side lug 20 can increase the strength of the body 10 itself, and the fixed side lug 20 is configured to be connected to the box body 310 of the battery pack 300. In this way, the stability of the entire battery pack 300 after molding is improved.

With reference to FIG. 2 to FIG. 4 and FIG. 6, in an embodiment of the disclosure, in order to ensure the strength of the fixed side lug 20 when the fixed side lug 20 is installed with the beam 320 of the box body 310, the fixed side lug 20 includes an upper sheet 21 and a lower sheet 22 attached to each other. The fixed side lug 20 is arranged to be formed by two portions, that is, the upper sheet 21 and the lower sheet 22 that are attached to each other, and in this way, the installation strength of the entire fixed side lug 20 is ensured. The structural strength of the fixed side lug 20 and the beam 320 during installation is thus ensured, and therefore, the installation stability of the battery pack 300 is ensured. Understandably, in order to ensure the structural strength of the entire fixed side lug 20, after the upper sheet 21 and the lower sheet 22 are in an attached state, the two may still be welded to form a whole, so that the installation strength of the fixed side lug 20 can be further ensured.

Herein, in order to further ensure the structural strength of the entire fixed side lug 20, the upper sheet 21 and the lower sheet 22 are connected by engagement connection, so that the two become a whole, and the two are installed with the beam 320 as a whole after being engaged with each other to improve the connection strength with the beam 320.

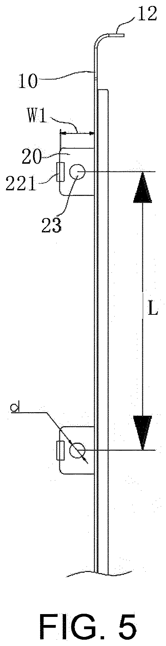

To be specific, with reference to FIG. 2 and FIG. 5, in this embodiment, the fixed side lug 20 is provided with an installation hole 23, that is, the upper sheet 21 and the lower sheet 22 are provided with the connecting installation hole 23. The installation hole 23 is configured to be connected to the beam 320 by a fastener, for example, by a bolt.

To be specific, with reference to FIG. 2 to FIG. 6, in order to allow the upper sheet 21 and the lower sheet 22 to be easily engaged, in this embodiment, the lower sheet 22 is integrally formed with a buckle portion 221 towards the direction of the upper sheet 21, and the buckle portion 221 is configured to be engaged with a surface of the upper sheet 21. By integrally molding the buckle portion 221 on the lower sheet 22, the upper sheet 21 and the lower sheet 22 may be easily connected as a whole. In this way, the process of forming the structure of the entire fixed side lug 20 may be easily performed, and molding may also be conveniently carried out. The buckle portion 221 is formed on the lower sheet 22 after the upper sheet 21 is formed and the lower sheet 22 is initially formed, so that the buckle 221 is engaged with the surface of the upper sheet 21, and the upper sheet 21 and the lower sheet 22 became a whole. Further, the entire fixed side lug 20 needs to overlap with the beam 320, so a sufficient contact area is required to be provided between the two. By forming buckle portion 221 on the lower sheet 22 towards the upper sheet 21, the flatness of the fit between the lower sheet 22 and the beam 320 is ensured. That is, it is ensured that the lower sheet 22 can have a sufficient contact area with the beam 320, such that the installation stability with the beam 320 and the fixing reliability of the two is ensured and improved.

Herein, with reference to FIG. 2 and FIG. 3 and FIG. 5 and FIG. 6, in order to allow the buckle portion 221 to be easily bent and formed, in this embodiment, a width of the buckle portion 221 in a length direction of the body 10 is less than a width of the lower sheet 22 in the length direction of the body 10. Therefore, the buckle portion 221 having a smaller width can be easily pressed and formed. Alternatively, in other embodiments, in order to ensure the stability of the engagement connection between the upper sheet 21 and the lower sheet 22, the width of the buckle portion 221 in the length direction of the body 10 may be arranged to be equal to the width of the lower sheet 22 in the length direction of the body 10. In this way, the contact area between the buckle portion 221 and the upper sheet 21 increases, so the connection stability between the upper sheet 21 and the lower sheet 22 is improved.

To be specific, in order to facilitate heat dissipation of a battery after the side plate 100 is used for battery installation, in this embodiment, the main body 10 is formed with a through hole 11 at the bent position. In this way, by forming the through hole 11 at the position of the bent portion on the body 10, heat generated by the battery during use may be dissipated through the through hole 11, so that the safety of the battery module 200 in use is ensured.

To be specific, before the body 10 is bent, the position to be bent is cut from the body 10 first, so that a gap is formed between a cut out part to be bent and the body 10, and the cut out part to be bent is then bent. The hollow part formed on the body 10 after bending becomes the through hole 11, so that heat generated by the battery module 200 may be dissipated through the through hole 11. Further, the arrangement of the hollow part may also be used prevent the problem of heat transfer caused by contact between adjacent battery modules 200 from occurring, thermal runaway can be suppressed, and the safety performance of the battery pack 300 is improved. Further, in this embodiment, the molding method of bending is adopted, so that the processing of hole formation is not required to be additionally performed on the side plate 100, so the processes are reduced, and efficiency is improved.

To be specific, in this embodiment, a stamping process is performed on the cut out part to be bent to form the upper sheet 21 and the lower sheet 22, so that the mold and stamping equipment are used to apply pressure to the part to be bent, so that the part to be bent is plastically deformed. Therefore, the formed upper sheet 21 and the lower sheet 22 are obtained. In this embodiment, the forming process of bending is simple and easy to operate.

To be specific, with reference to FIG. 2, FIG. 3, and FIG. 6, corresponding to the separation structure of the upper sheet 21 and the lower sheet 22, the through hole 11 formed in this embodiment includes an upper sub-through hole 111 and a lower sub-through hole 112 arranged separately. The upper sheet 21 is disposed on the side of the body 10 close to the upper sub-through hole 111, and the lower sheet 22 is disposed on the side of the body 10 close to the lower sub-through hole 112. To be specific, the upper sub-through hole 111 is formed by bending the upper sheet 21, and the lower sub-through hole 112 is formed by bending the lower sheet 22. That is, the upper sub-through hole 111 and the lower sub-through hole 112 respectively correspond to the shapes of the upper sheet 21 and the lower sheet 22 before bending, so that the heat of the battery module 200 may be dissipated through the upper sub-through hole 111 and the lower sub-through hole 112.

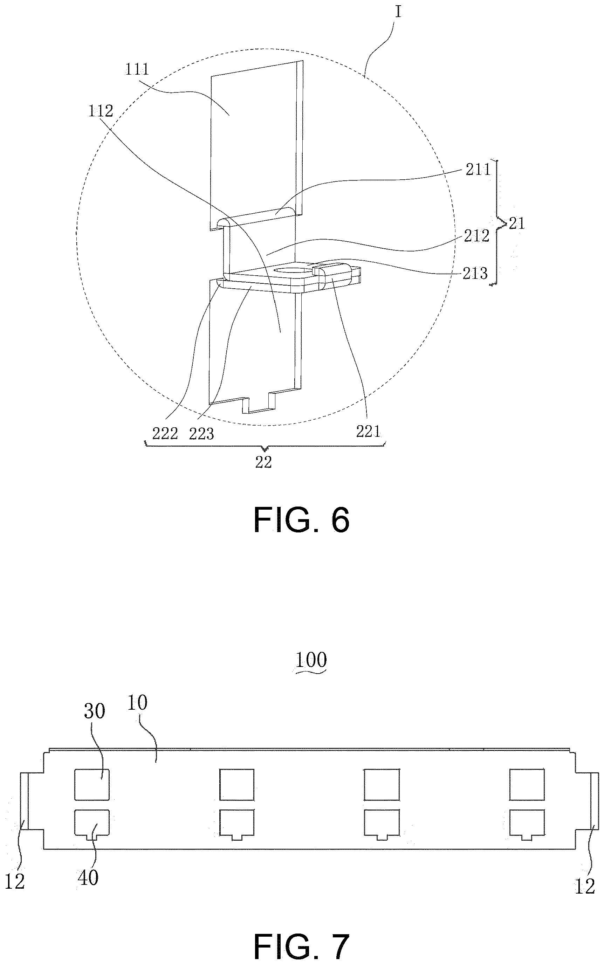

To be specific, with reference to FIG. 7, in this embodiment, because the fixed side lug 20 includes the upper sheet 21 and the lower sheet 22, correspondingly before bending, an upper to-be-bent structure 30 and a lower to-be-bent structure 40 are cut out on the body 10. The upper to-be-bent structure is square, and the upper sheet 21 is formed after stamping, bending, and molding. In this embodiment, since the lower to-be-bent structure needs to form the buckle portion 221, the lower to-be-bent structure 40 is in a "T" shape as shown in FIG. 7, so that the protruding part of the lower to-be-bent structure 40 may be stamped to form the buckle portion 221.

Herein, when bending the upper to-be-bent structure 30 and the lower to-be-bent structure 40 to form the upper sheet 21 and the lower sheet 22 respectively, two of following three implementations are included:

To be specific, with reference to FIG. 6, in the first implementation of bending, the upper sheet 21 is formed by bending part of the body 10 downwards and has a first vertical portion 212 and a first horizontal attachment portion 213. The lower sheet 22 is formed by horizontally bending part of the body 10 towards a side away from the battery. That is, part of the upper to-be-bent structure 30 is bent downwards and then horizontally bent, and the lower to-be-bent structure 40 is only bent horizontally towards the side away from the battery, so as to be attached to the bent shape of the upper to-be-bent structure 30. In this way, the lower sheet 22 formed by the lower to-be-bent structure 40 herein has a larger contact area with the beam.

Herein, in order to ensure the structural strength of the upper sheet 21, the first vertical portion 212 in this embodiment is attached to the surface of the body 10. That is, when part of the upper to-be-bent structure 30 is bent downwards, it is bent vertically along the surface of the body 10 first and then is bent horizontally.

To be specific, the upper sheet 21 formed by this bending method includes a first arc-shaped transition portion 211, the first vertical portion 212, and the first horizontal attachment portion 213 connected in sequence. The first arc-shaped transition portion 211 is connected to the body 10, the first vertical portion 212 is formed by the first arc-shaped transition portion 211 extending towards the lower sheet 22, and the first horizontal attachment portion 213 is formed by extending one end of the first vertical portion 212 away from the body 10 in a horizontal direction.

To be specific, the upper sheet 22 formed by this bending method includes a second arc-shaped transition portion 222 and a second horizontal attachment portion 223. The second horizontal attachment portion 223 is formed by the second arc-shaped transition portion 222 extending horizontally away from the body 10, and the buckle portion 221 is bent towards the body 10. Herein, an upper surface of the second horizontal attachment portion 223 is attached to a lower surface of the first horizontal attachment portion 213, and the buckle portion 221 is fastened to the upper surface of the first horizontal attachment portion 213. In this way, the stability of the upper to-be-bent structure 30 and the lower to-be-bent structure 40 after being bent and formed is ensured.

To be specific, after forming in this way, a lower surface of the second horizontal attachment portion 223 is configured to overlap with the surface of the beam 320, so as to be equipped with a sufficient contact area with the beam 320.

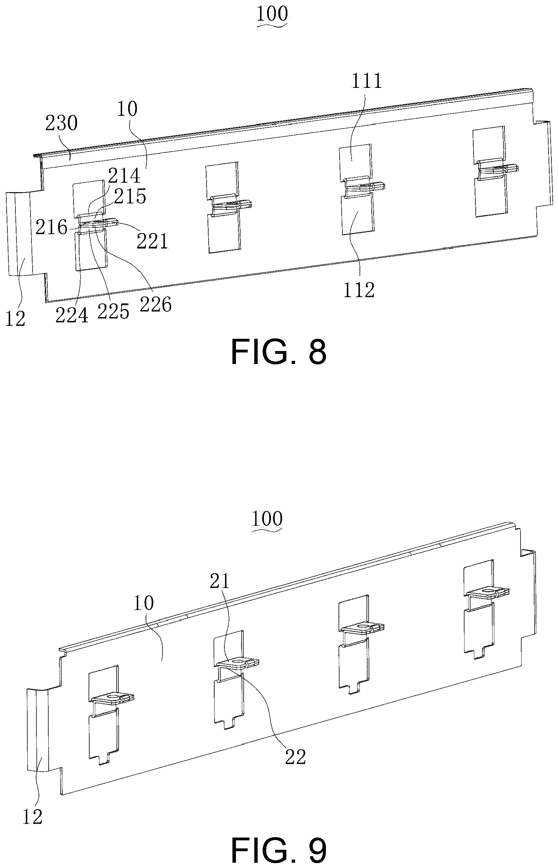

With reference to FIG. 8, in the second implementation of bending, the upper sheet 21 is formed by bending part of the body 10 downwards and includes a second vertical portion 215 and a third horizontal attachment portion 216. The lower sheet 22 is formed by bending part of the body 10 upwards. Further, the third vertical portion 225 is attached to the fourth horizontal attachment portion 226, and the third horizontal attachment portion 216 is attached to the fourth horizontal attachment portion 226. Further, the fourth horizontal attachment portion 226 is attached to the surface of the beam 320, and both the third horizontal attachment portion 216 and the fourth horizontal attachment portion 226 are connected to the beam 320 through fasteners, so the connection strength with the beam 320 is improved in this way.

To be specific, when bending to form the upper sheet 21, the upper to-be-bent structure 30 is first bent downwards and then is partially bent horizontally. When bending to form the lower sheet 22, the lower to-be-bent structure 40 is first bent upwards and then is bent horizontally.

Besides, in order to ensure the structural strength of the upper sheet 21 and the lower sheet 22, when bending, the upper to-be-bent structure 30 is attached to the surface of the body 10 when it is partially bent downwards. That is, the second vertical portion 215 is attached to the surface of the body 10. Part of the lower to-be-bent structure 40 is bent upwards and attached to the surface of the body 10. That is, the third vertical portion 225 is attached to the surface of the body 10, so that the body 10 supports the second vertical portion 215 and the third vertical portion 225.

To be specific, the upper sheet 21 formed by this way includes a third arc-shaped transition portion 214, the second vertical portion 215, and the third horizontal attachment portion 216. The third arc-shaped transition portion 214 is connected to the body 10, the second vertical portion 215 is formed by the third arc-shaped transition portion 214 extending towards, and the third horizontal attachment portion 216 is formed by extending one end of the second vertical portion 215 away from the third arc-shaped transition portion 214 in the horizontal direction.

To be specific, the lower sheet 22 formed by this way includes a fourth arc-shaped transition portion 224, the third vertical portion 225, and the fourth horizontal attachment portion 226. The fourth arc-shaped transition portion 224 is connected to the body 10, the third vertical portion 225 is formed by the fourth arc-shaped transition portion 224 extending towards, and the fourth horizontal attachment portion 226 is formed by extending one end of the third vertical portion 225 away from the fourth arc-shaped transition portion 224 in the horizontal direction. To be specific, after forming in this way, a lower surface of the fourth horizontal attachment portion 226 is configured to overlap with the surface of the beam 320, so as to be equipped with a sufficient contact area with the beam 320.

With reference to FIG. 9, in the third bending method contrary to the first implementation, the upper to-be-bent structure 30 is bent to form a horizontal attachment portion only, the lower to-be-bent structure 40 is bent in the direction of the upper to-be-bent structure 30 to be attached to the horizontal attachment portion formed by the upper to-be-bent structure 30, and a vertical portion is formed. In the specific application of the above three bending methods, the bending form can also be adjusted according to the height of the beam 320, so as to adjust the height of the side lug.

Since the lower sheet 22 needs to overlap with the beam 320 to be connected to the beam 320, the lower sheet 22 needs to have a sufficient contact area with the beam 320. Therefore, in this embodiment, preferably the first bending is completed to form the upper sheet 21 and the lower sheet 22, and only the lower to-be-bent structure 40 is bent away from the body 10 to form the horizontal lower sheet 22. In addition, in the case where the height of the side plate 100 does not need to be adjusted, after the upper sheet 21 and the lower sheet 22 are formed by bending in the first way, the first vertical portion 212 has a larger shielding surface corresponding to the position of the body 10. When the upper sheet 21, the lower sheet 22, and the beam 320 are installed through bolts, the bolts are installed from top to bottom, and the corresponding shielding surfaces may shield these tightening tools. This prevents the tightening tools from scratching an insulating film 230 inside the side plate 100, which may result in insulation failure, when working. Further, the screws are also prevented from falling into the through hole 11 to a certain extent during the screwing process.

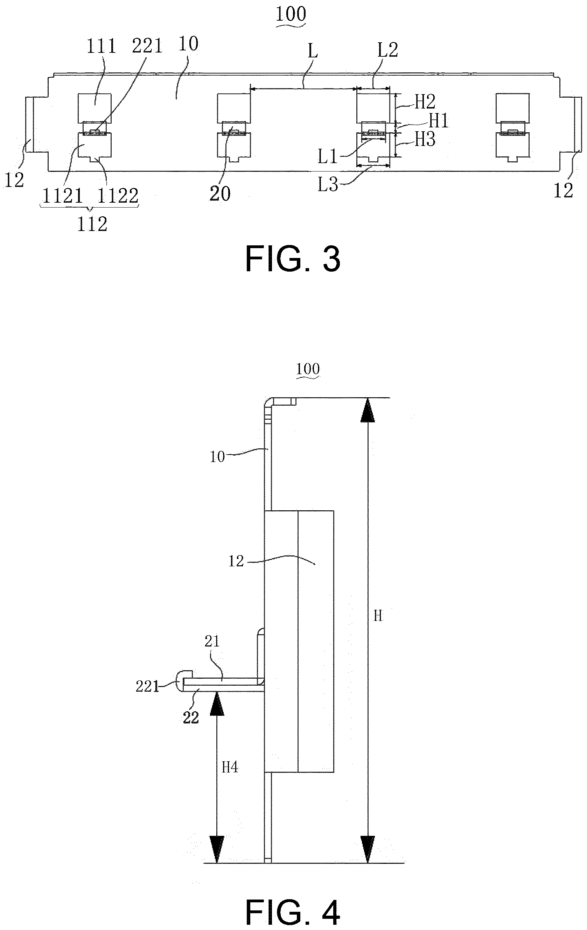

With reference to FIG. 3, in this embodiment, a width of the upper to-be-bent structure 30 in the length direction of the body is L2. Correspondingly, a width of the upper sub-through hole 111 in the length direction of the body 10 is L2, a height of the upper sub-through hole 111 in the length direction of the body 10 is H2, and a width of the lower to-be-bent structure 40 in the length direction of the body 10 is L3. Correspondingly, a width of the lower sub-through hole 112 in the length direction of the body 10 is L3, and a gap between the upper sub-through hole 111 and the lower sub-through hole 112 is H1, where L2=L3.

With reference to FIG. 4, in an embodiment of the disclosure, a height of the body 10 is H, and the range of H1 is configured to be: 8%H≤H1≤12%H. Therefore, through the setting method of H1, the connection between the upper sheet 21 and the lower sheet 22 on the body 10 has sufficient connection strength, so that the installation strength of the entire fixed side lug 20 is thus ensured. Further, when it is set to 8%H≤H1≤12%H, specifically, H1 can be 8%H, 9%H, 10%H, 11%H, or 12%H. In this way, the value of H1 is set within an appropriate range, and it is thus avoided that when the range of H1 is excessively small, for example, when the width of H1 is less than 8%H, it is easy to cause excessive stress at the root and cause insufficient supporting force on the attachment surface of the fixed side lug 20. For instance, when H1 is greater than 12%, the remaining height of the body 10 in the H1 direction may be reduced, so that after the fixed side lug 20 is punched out, the bonding area of the side plate 100 at this position is reduced, and the strength requirement for bonding and fixing the cell and the fixed side lug 20 of the side plate 100 cannot be ensured.

Herein, with reference to FIG. 3, in this embodiment, both the widths of the upper sheet 21 and the lower sheet 22 in the length direction of the body 10 are L1. Both the widths of the upper sub-through hole 111 and the lower sub-through hole 112 in the length direction of the body 10 are L2. Both the thicknesses of the upper sheet 21 and the lower sheet 22 are D, that is, the thickness of the body 10 is D, where L1=L2-1.5D. Therefore, by setting the restriction on the thickness of the body 10, the thickness of the side plate 100 is within an appropriate range. In this way, when the thickness of the body 10 is large, the distance between the upper to-be-bent structure 30 and the lower to-be-bent structure 40 and the body 10 is prevented from being excessively small, so that inconvenient bending and molding are prevented from occurring. Further, since the thickness of the side plate 100 is within an appropriate range, the bending can still be performed when the distance between the upper to-be-bent structure 30 and the lower to-be-bent structure 40 the body 10 is small. Therefore, through the arrangement of L1, L2, and D, the upper sheet 21 and the lower sheet 22 are easy to be bent and formed, and at the same time, the widths of the upper sheet 21 and the lower sheet 22 as well as the structural strength of the bent portion are also ensured.

With reference to FIG. 3 and FIG. 4, in an embodiment of the disclosure, the height of the body 10 is H, the gap between the upper sub-through hole 111 and the lower sub-through hole 112 is H1, and the height of the upper sub-through hole 111 is H2. The lower sub-through hole 112 includes a first portion 1121 and a second portion 1122. The first portion 1121 is formed after part of the body is bent to form the lower sheet 22. The second portion 1122 is formed after part of the body is bent to form the buckle portion 221. The height of the first portion 1121 is H3, where H1+H2+H3≤0.7H. That is, the height of the corresponding upper to-be-bent structure 30 is H2, and body of the lower to-be-bent structure 40 is H3. Therefore, by setting these values, after the fixed side lug 20 is obtained through bending, the body 10 at the unbent position can have a sufficient bonding area with the cell, so that the bonding stability between the unbent part of the body 10 and the cell is ensured.

Herein, H3≈H1+H2, so that the processing and molding of the upper sheet 21 and the lower sheet 22 may be easily performed, and the connection strength at the body 10 at the height H1 between the two is ensured.

Further, with reference to FIG. 4, in this embodiment, the distance between the lower surface of the lower sheet 22 and the bottom of the body 10 is H4, where 0.4H<H4<0.68H, and specifically, H4 can be 0.4H, 0.45H, 0.5H, 0.55H, 0.6H, and 0.68H. Through the above arrangement, the position of the fixed side lug 20 is close to the middle position of the body 10, so that the position of the fixed side lug 20 is prevented from being set higher, which may increase the height of the fixed beam 320 of the box body 310 and then further increases the weight of the box body 310. Further, the position of the fixed side lug 20 is prevented from being set lower, which may lower the height the beam 320 and then further affect the bending and torsional rigidity of the beam 320. In this way, the natural frequency of the entire battery pack 300 is thus prevented from being reduced, and the risk of structural failure of the battery pack 300 is prevented from being increased.

Herein, with reference to FIG. 5, in this embodiment, the diameter of the installation hole 23 is d, and the width of each of the upper sheet 21 and the lower sheet 22 away from the body 10 is w1. That is, in this embodiment, the width of the first horizontal attachment portion 213 and the second horizontal attachment portion 223 in the direction away from the body 10 is w1, where 2d+4mm≤w1≤3d. There, with the above arrangement of the diameter of the installation hole 23, the installation stability of the upper sheet 21, the lower sheet 22, and the beam 320 is ensured.

In addition, in an embodiment, 2d+4mm≤w1≤H2 and 2d+4mm≤L1≤L2-9mm, so that after the fixed side lug 20 is bent out of the body 10, the connection strength between the body 10 and the fixed side lug 20 is ensured.

With reference to FIG. 1 to FIG. 3 and FIG. 8 and FIG. 9, in an embodiment of the disclosure, in order to ensure the installation stability of the side plate 100 and the beam 320, a plurality of fixed side lugs 20 are formed on the body 10, and the plurality of fixed side lugs 20 are arranged separately in the length direction of the body 10. Therefore, by arranging the plurality of fixing side lugs 20, a plurality of fixing points with the beam 320 are provided, so that the installation stability of the side plate 100 and the beam 320 may be ensured.

To be specific, in this embodiment, the distance L between every two adjacent fixed side lugs 20 is between 80 mm and 100 mm. Therefore, the gap between the fixed side lugs 20 is arranged to be within an appropriate range, so the problem of unreliable fixation caused by uneven distribution of force between the fixed side lugs 20 due to an excessively far distance between the fixed side lugs 20 is prevented from occurring. Further, the problems of inconvenient assembly and waste of materials caused by the needs of arrangement of more fixing points due to an excessively close distance between the fixed side lugs 20 are also prevented from occurring.

With reference to FIG. 2 to FIG. 5 and FIG. 7 to FIG. 9, in an embodiment of the disclosure, in order to facilitate the installation of the side plate 100 and the end plate 220, both sides of the body 10 in the length direction are provided with folded edges 12, and the folded edges 12 are configured to be connected to the end plate 220. Therefore, by providing the folded edges 12 at both ends of the body 10 in the length direction, the end plate 220 may be conveniently installed, for example, may be conveniently attached and welded to the end plate 220, so that the frame of the entire battery module 200 may be conveniently formed.

In view of the foregoing, in the battery module 200, by bending and molding the fixed side lug 20 on the side plate 100, the fixed side lug 20 and the body 10 are integrally formed, so that the forming process of the fixed side lug 20 is simple, and the fixed side lug 20 may be easily formed. Further, the fixed side lug 20 is configured to include the upper sheet 21 and the lower sheet 22, so that the connection strength of the fixed side lug 20 is ensured. After the upper sheet 21 and the lower sheet 22 are formed relative to the body 10, the upper sub-through hole 111 and the lower sub-through hole 112 are formed at corresponding positions of the body 10. In this way, heat generated by the battery may be dissipated through the upper sub-through hole 111 and the lower sub-through hole 112, and the safety of the battery module 200 in use is thus ensured. In addition, in this embodiment, the fixed side lug 20 is formed by bending part of the side plate 100 itself. In this way, the problem of mutual interference between the flange and the fixed side lug 20 when molding the fixed side lug 20 and the flange at the end of the body 10 by an extrusion process is prevented from occurring.

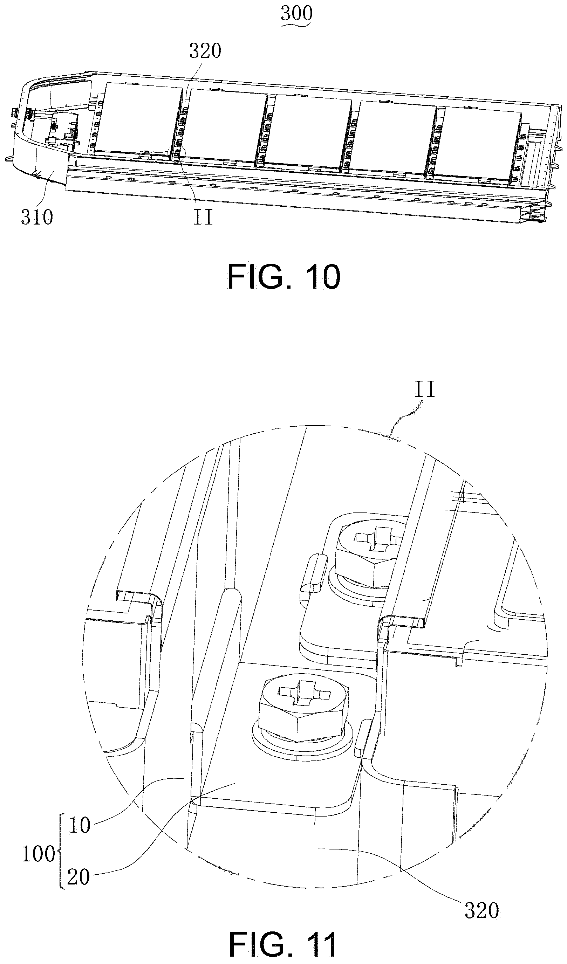

With reference to FIG. 10 and FIG. 11, in the second embodiment of the disclosure, the battery pack 300 including the box body 310, the beam 320, and the abovementioned battery module 200 is also provided.

Herein, the fixed side lug 20 in the side plate 100 is connected to the box body 310. To be specific, the box body 310 is provided with the beam 320, and the fixed side lug 20 in the battery module 200 overlaps with the beam 320 and is connected to the beam 32.

Therefore, by allowing the side plate 100 of the battery module 200 and the fixed side lug 20 to be integrally formed and allowing the fixed side lug 20 to overlap with the beam 320 and to be connected to the beam 320, the installation stability of the entire battery pack 300 is ensured. It should be noted that the fixed side lug 20 may also be connected to a longitudinal beam or a side beam in the box body, as long as the fixed side lug 20 is fixed to the box body, which is not limited herein.

## Claims

1. A battery module, comprising:
an end plate (220);
a side plate (100), connected to the end plate (220), forming an accommodation space (240) together with the end plate (220), and comprising a body (10) and a fixed side lug (20) integrally formed with the body (10), wherein the fixed side lug (20) is formed by bending part of the body (10) towards a side away from a battery, the body (10) is formed with a through hole (11) at a bent position, and the fixed side lug (20) is configured to be connected to a battery box; and
a plurality of single cells accommodated in the accommodation space (240).

2. The battery module according to claim 1, wherein the fixed side lug (20) comprises an upper sheet (21) and a lower sheet (22) attached to each other.

3. The battery module according to claim 2, wherein the upper sheet (21) and the lower sheet (22) are connected by engagement connection.

4. The battery module according to claim 3, wherein the lower sheet (22) is integrally formed with a buckle portion (221) towards a direction of the upper sheet (21), and the buckle portion (221) is configured to be engaged with a surface of the upper sheet (21).

5. The battery module according to claim 4, wherein a width of the buckle portion (221) in a length direction of the body (10) is less than a width of the lower sheet (22) in the length direction of the body (10).

6. The battery module according to claim 2, wherein the upper sheet (21) is formed by bending part of the body (10) downwards and has a first vertical portion (212) and a first horizontal attachment portion (213), the lower sheet (22) is formed by horizontally bending part of the body (10) towards a side away from the single cells, and the first horizontal attachment portion (213) and the lower sheet (22) are attached to each other, or
wherein the upper sheet (21) is formed by bending part of the body (10) downwards and has a second vertical portion (215) and a third horizontal attachment portion (216), the lower sheet (22) is formed by bending part of the body (10) upwards and has a third vertical portion (225) and a fourth horizontal attachment portion (226), and the third horizontal attachment portion (216) and the fourth horizontal attachment portion (226) are attached to each other.

7. The battery module according to claim 1, wherein the through hole (11) comprises an upper sub-through hole (111) and a lower sub-through hole (112) arranged separately, the fixed side lug (20) comprises an upper sheet (21) and a lower sheet (22) attached to each other, the upper sheet (21) is disposed on a side of the body (10) close to the upper sub-through hole (111), and the lower sheet (22) is disposed on a side of the body (10) close to the lower sub-through hole (112).

8. The battery module according to claim 7, wherein a height of the body (10) is H, and a gap between the upper sub-through hole (111) and the lower sub-through hole (112) is H1, where 8%H≤H1≤12%H.

9. The battery module according to claim 8, wherein a height of the upper sub-through hole (111) is H2, the lower sub-through hole (112) comprises a first portion (1121) and a second portion (1122) from top to bottom, the lower sheet (22) is close to the first portion (1121), a height of the first portion (1121) is H3, and H1+ H2+ H3≤0.7H.

10. The battery module according to claim 8, wherein a distance between a lower surface of the lower sheet (22) and a bottom portion of the body (10) is H4, and 0.4H≤H4≤0.68H.

11. The battery module according to claim 7, wherein widths of the upper sheet (21) and the lower sheet (22) in a length direction of the body (10) are both L1, widths of the upper sub-through hole (111) and the lower sub-through hole (112) in the length direction of the body (10) are both L2, and thicknesses of the upper sheet (21) and the lower sheet (22) are both D, where L1=L2-1.5D.

12. The battery module according to claim 1, wherein both sides of the body (10) in a length direction are provided with folded edges (12), and the folded edges (12) are configured to be connected to the end plate (220).

13. The battery module according to claim 1, wherein a plurality of the fixed side lugs (20) are integrally formed on the body (10), the fixed side lugs (20) are arranged separately in a length direction of the body (10), and a gap L between two adjacent fixed side lugs (20) is between 80 mm to 100 mm.

14. A battery pack, comprising:
a box body (310); and
the battery module according to any one of claims 1 to 13, wherein the fixed side lug (20) on the side plate (100) is connected to the box body (310).
